# EUROPÄISCHE PATENTANMELDUNG

(11) **EP 3 957 466 A1**
(43) Veröffentlichungstag der Anmeldung: **23.02.2022**
(21) Anmeldenummer: 20192167.3
(22) Anmeldetag: 21.08.2020
(51) Int. Cl.: B29C 64/153, B29C 64/165, B29C 64/176, B29C 64/188, B29C 64/232, B29C 64/236, B29C 64/241, B29C 64/245, B29C 64/357, B29C 64/371, B29C 64/379, B33Y 10/00, B33Y 30/00, B33Y 40/00, B22F 10/00, B22F 12/00

(54) **ADDITIVES FERTIGUNGSVERFAHREN ZUM KONTINUIERLICHEN HERSTELLEN VON FORMKÖRPERN UND ENTSPRECHENDE VORRICHTUNG**

(71) Anmelder: Siemens Aktiengesellschaft, 80333 München (DE)
(72) Erfinder: Heuser, Karsten, 91056 Erlangen (DE); Waldmann, Julian Andreas, 82041 Oberhaching (DE)

(57) **Zusammenfassung**

Eine Vorrichtung (100) zum kontinuierlichen Herstellen von Formkörpern (K1-K7) mittels eines additiven Fertigungsverfahrens bereit. Die Vorrichtung umfasst einen Verarbeitungsbereich (2) sowie eine Trenneinrichtung (3). Der Verarbeitungsbereich (2) ist zur Aufnahme eines Pulvers ausgestaltet, wobei in dem Verarbeitungsbereich (2) mittels des additiven Fertigungsverfahrens eine schichtweise Verarbeitung zumindest eines Teils des Pulvers zu Formkörpern (K1-K7) durchführbar ist. Die Trenneinrichtung (3) umfasst mindestens ein Trennelement (31a, 32a; 31b; 31c, 32c), welches in den Verarbeitungsbereich (2) derart einbringbar oder eingebracht ist, dass Kammern (21, 22) in dem Verarbeitungsbereich (2) ausgebildet werden. Die Trenneinrichtung (3) weist einen Antrieb (33) auf, welcher dazu ausgebildet ist, das mindestens eine Trennelement (31a, 32a; 31b; 31c, 32c) derart zu bewegen, dass die Kammern (21, 22) während der schichtweisen Verarbeitung in senkrechter Richtung von einem Bearbeitungsabschnitt (B1) des Verarbeitungsbereichs (2) zu einem Entnahmeabschnitt (B2) des Verarbeitungsbereichs (2) abgesenkt werden. Weiter bewegt der Antrieb (33) das mindestens eine Trennelement (31a, 32a; 31b; 31c, 32c) derart, dass das mindestens eine Trennelement (31a, 32a; 31b; 31c, 32c) im Entnahmeabschnitt (B2) des Verarbeitungsbereichs (2) zumindest teilweise derart aus dem Verarbeitungsbereich (2) ausgebracht wird, dass eine untere der Kammern freigelegt wird, sodass die hergestellten Formkörper (K1-K7) aus dem Verarbeitungsbereich (2) fallen oder gleiten.

## Beschreibung

Die Erfindung betrifft additives Fertigungsverfahren zum kontinuierlichen Herstellen von Formkörpern sowie eine entsprechende Vorrichtung. Insbesondere betrifft die Erfindung die Herstellung mittels selektiven Lasersinterns oder mittels Binder-Jetting-Verfahren.

### Stand der Technik

Additive Fertigungsverfahren zum Herstellen von Formkörpern, d. h. dreidimensionaler Strukturen bzw. Werkstücke, umfassen selektives Lasersintern und Binder-Jetting-Verfahren. Lasersintern umfasst hierzu drei wesentliche Prozessschritte. Im ersten Schritt wird die zum selektiven Lasersintern verwendete Anlage vorbereitet, indem eine Baukammer in die geöffnete Anlage eingebracht wird. Die Baukammer wird anschließend mit einem Schutzgas geflutet. In einem zweiten Schritt erfolgt der eigentliche Laserdruckprozess, wobei in einem Schichtaufbau das Werkstück Schicht für Schicht aufgebaut wird. Ein pulverförmiger Ausgangsstoff wird hierzu mit einem Laser bestrahlt, wobei es zu einem Sintering-Prozess kommt. Dadurch lassen sich beliebige dreidimensionale Strukturen herstellen. In einem dritten Schritt wird die Baukammer entnommen. Die gedruckten Bauteile befinden sich in der mit Pulver gefüllten Baukammer und müssen aus der Baukammer entnommen und gesäubert werden. Hierzu kann die Entpulverung händisch mit einem Staubsauger in einer zweiten Kammer durchgeführt werden.

Von den drei beschriebenen Prozessschritten ist lediglich der zweite Prozessschritt, d. h. das tatsächliche Lasersintern, wertschöpfend, während die Prozessschritte 1 und 3 lediglich der Vor- und Nachbearbeitung dienen. Zusätzlich werden Arbeitskräfte für die Durchführung der ersten und dritten Prozessschritte benötigt. Dies führt dazu, dass die erzeugten Bauteile teurer werden und die Produktivität der eingesetzten Maschinen im Allgemeinen niedrig ist.

Es ist daher eine Aufgabe der Erfindung, den Gesamtprozess zur Herstellung von Formkörpern mittels additiver Fertigungsverfahren effizienter zu gestalten.

### Zusammenfassung der Erfindung

Die Erfindung stellt eine Vorrichtung zum kontinuierlichen Herstellen von Formkörpern mittels additiver Fertigungsverfahren und ein entsprechendes additives Fertigungsverfahren mit den Merkmalen der unabhängigen Patentansprüche bereit.

Vorteilhafte Ausgestaltungen sind Gegenstand der Unteransprüche.

Gemäß einem ersten Aspekt stellt die Erfindung demnach eine Vorrichtung zum kontinuierlichen Herstellen von Formkörpern mittels eines additiven Fertigungsverfahrens bereit. Die Vorrichtung umfasst einen Verarbeitungsbereich sowie eine Trenneinrichtung. Der Verarbeitungsbereich ist zur Aufnahme eines Pulvers ausgestaltet, wobei in dem Verarbeitungsbereich mittels des additiven Fertigungsverfahrens eine schichtweise Verarbeitung zumindest eines Teils des Pulvers zu Formkörpern durchführbar ist. Die Trenneinrichtung umfasst mindestens ein Trennelement, welches in den Verarbeitungsbereich derart einbringbar oder eingebracht ist, dass Kammern in dem Verarbeitungsbereich ausgebildet werden. Die Trenneinrichtung weist einen Antrieb auf, welcher dazu ausgebildet ist, das mindestens eine Trennelement derart zu bewegen, dass die Kammern während der schichtweisen Verarbeitung in senkrechter Richtung von einem Bearbeitungsabschnitt des Verarbeitungsbereichs zu einem Entnahmeabschnitt des Verarbeitungsbereichs abgesenkt werden. Weiter bewegt der Antrieb das mindestens eine Trennelement derart, dass das mindestens eine Trennelement im Entnahmeabschnitt des Verarbeitungsbereichs zumindest teilweise derart aus dem Verarbeitungsbereich ausgebracht wird, dass eine untere der Kammern freigelegt wird, sodass die hergestellten Formkörper aus dem Verarbeitungsbereich fallen oder gleiten.

Gemäß einem zweiten Aspekt stellt die Erfindung ein additives Fertigungsverfahren zum kontinuierlichen Herstellen von Formkörpern bereit, wobei zumindest ein Teil eines in einen Verarbeitungsbereich eingebrachten Pulvers zur Herstellung der Formkörper mittels des additiven Fertigungsverfahrens schichtweise verarbeitet wird. Mindestens ein Trennelement ist oder wird derart in den Verarbeitungsbereich eingebracht, dass Kammern in dem Verarbeitungsbereich ausgebildet werden. Das mindestens eine Trennelement wird derart bewegt, dass die Kammern während der schichtweisen Verarbeitung in senkrechter Richtung von einem Bearbeitungsabschnitt des Verarbeitungsbereichs zu einem Entnahmeabschnitt des Verarbeitungsbereichs abgesenkt werden. Weiter wird das mindestens eine Trennelement derart bewegt, dass das mindestens eine Trennelement im Entnahmeabschnitt des Verarbeitungsbereichs zumindest teilweise derart aus dem Verarbeitungsbereich ausgebracht wird, dass eine untere der Kammern freigelegt wird, sodass die hergestellten Formkörper aus dem Verarbeitungsbereich fallen oder gleiten.

Die Vorrichtung zum kontinuierlichen Herstellen von Formkörpern mittels eines additiven Fertigungsverfahrens zeichnet sich dadurch aus. Somit wird die Vorrichtung nicht zum Durchführen von Batch-Prozessen sondern kontinuierlich betrieben. Auf das Öffnen der Vorrichtung und das Einbringen einer Baukammer in die geöffnete Anlage kann verzichtet werden. Insbesondere ist es auch nicht erforderlich, nach jedem Druckvorgang die Baukammer erneut mit Schutzgas zu fluten. Vorzugsweise wird die Vorrichtung zum kontinuierlichen Herstellen von Formkörpern mittels des additiven Fertigungsverfahrens anfänglich einmal gerüstet und kann anschließend ohne weitere manuelle Eingriffe betrieben werden. Durch den kontinuierlichen Betrieb kann der Laserdruckprozess deutlich schneller und effizienter durchgeführt werden. Die Produktivität wird entscheidend verbessert und das Verfahren wird wirtschaftlicher.

Ein weiterer Vorteil ist es, dass durch die kontinuierliche Bearbeitung nach der Fertigstellung eines Formkörpers keine manuelle Interaktion erforderlich ist, um einen weiteren Formkörper herzustellen. Aufgrund der langen Bearbeitungsdauer ist dies von besonderem Vorteil, da etwa bei Bearbeitungsvorgängen, welche nachts fertiggestellt werden, ohne dass ein Bediener anwesend ist, ohne unnötigen Leerlauf sofort mit der Bearbeitung eines weiteren Formkörpers fortgefahren werden kann.

Weiter kann auch ein einzelner Bediener problemlos eine Vielzahl derartiger Vorrichtung zum kontinuierlichen Herstellen von Formkörpern bedienen und überwachen.

Gemäß einer Ausführungsform der Vorrichtung zum kontinuierlichen Herstellen von Formkörpern mittels des additiven Fertigungsverfahrens ist die Vorrichtung über eine Schnittstelle mit einer Steuerungseinrichtung verbunden, über welche ein Bediener mittels Fernzugang die Vorrichtung steuern kann. Die Vorrichtung arbeitet kontinuierlich, sodass nach dem Fertigstellen eines Herstellungsvorgangs (ggf. abgesehen von einer Reinigung) keine manuelle Interaktion erforderlich ist, um einen weiteren Herstellungsvorgang zu starten. Dies ermöglicht es über einen Fernzugang die Vorrichtung zu steuern, ohne selbst vor Ort sein zu müssen.

Gemäß einer Ausführungsform der Vorrichtung zum kontinuierlichen Herstellen von Formkörpern mittels des additiven Fertigungsverfahrens handelt es sich um eine senkrecht angeordnete Vorrichtung. Hierunter ist zu verstehen, dass der Verarbeitungsbereich durch das Trennelement in senkrechter Richtung in Kammern geteilt wird. An einem oberen Ende des Bearbeitungsbereichs erfolgt die Erstellung der Bauteile, etwa durch Bestrahlung beim schichtweisen Lasersintern oder durch Verfestigung beim Binder-Jetting. Im unteren Ende werden die fertig hergestellten Formkörper bereitgestellt, indem diese aus dem Verarbeitungsbereich fallen oder gleiten.

Gemäß einer Ausführungsform umfasst die Vorrichtung zum kontinuierlichen Herstellen von Formkörpern mittels des additiven Fertigungsverfahrens eine Aufnahmeeinrichtung, welche dazu ausgebildet ist, aus dem Verarbeitungsbereich gefallene oder geglittene Formkörper aufzunehmen. Die Aufnahmeeinrichtung kann beispielsweise eine Wanne sein, welche aus der Vorrichtung entnommen werden kann, um die Formkörper zu entnehmen und weiter zu verarbeiten. Vorzugsweise kann die Aufnahmeeinrichtung separat entnommen werden, sodass ein Öffnen der gesamten Vorrichtung nicht erforderlich ist. Insbesondere verbleibt ein Schutzgas in dem Bereich zwischen der Lasereinrichtung und dem Bearbeitungsabschnitt des Verarbeitungsbereichs.

Gemäß einer Ausführungsform der Vorrichtung zum kontinuierlichen Herstellen von Formkörpern mittels des additiven Fertigungsverfahrens umfasst die Aufnahmeeinrichtung ein Förderelement, um aufgenommene Formkörper von dem Verarbeitungsbereich weg zu transportieren. Der kontinuierliche Betrieb der Vorrichtung zum Herstellen von Formkörpern wird dadurch weiter verbessert. So kann sogar vorgesehen sein, dass eine manuelle Interaktion zwischen Anwendern und der Vorrichtung selbst nicht erforderlich ist. Der Anwender muss lediglich die mittels des Förderelements bereitgestellten Formkörper entnehmen. Ein Öffnen der Vorrichtung oder von Elementen der Vorrichtung ist nicht mehr erforderlich.

Gemäß einer Ausführungsform umfasst die Vorrichtung zum kontinuierlichen Herstellen von Formkörpern mittels des additiven Fertigungsverfahrens eine Nachbearbeitungseinrichtung, welche dazu ausgebildet ist, die mittels des Förderelements transportierten Formkörper nachzubearbeiten. Auch die Nachbearbeitung kann dadurch vollautomatisch durchgeführt werden und die erforderlichen manuellen Eingriffe werden weiter reduziert.

Gemäß einer Ausführungsform der Vorrichtung zum kontinuierlichen Herstellen von Formkörpern mittels des additiven Fertigungsverfahrens ist die Nachbearbeitungseinrichtung dazu ausgebildet, die Formkörper mittels eines der folgenden Verfahren durchzuführen:
- Bearbeitung der Formkörper mittels eines Sandstrahlverfahrens,
- Polieren der Formkörper,
- Schleifen der Formkörper,
- Tampern der Formkörper,
- Beschichten der Formkörper,
- Wärmebehandlung und
- Färben der Formkörper.
Die Formkörper können somit nach dem Herstellen in einer InLine-Technik kontrolliert werden.

Gemäß einer Ausführungsform umfasst die Vorrichtung zum kontinuierlichen Herstellen von Formkörpern mittels des additiven Fertigungsverfahrens eine Pulverzufuhreinrichtung, welche dazu ausgebildet ist, dem Verarbeitungsbereich schichtweise Pulver zuzuführen. Die Pulverzufuhreinrichtung ist derart mit der Aufnahmeeinrichtung gekoppelt, um beim Herausfallen oder Herausgleiten der Formkörper in der Aufnahmeeinrichtung angefallenes Pulver zumindest teilweise dem Verarbeitungsbereich wieder zuzuführen. Das beim additiven Fertigungsverfahren anfallende restliche Pulver kann somit in einem geschlossenen Kreislauf mit neuem Pulver vermischt werden, und vorzugsweise über eine inline Kontrolle qualitätsüberprüft und wieder am oberen Ende in den Bearbeitungsabschnitt des Verarbeitungsbereichs eingebracht werden.

Gemäß einer Ausführungsform der Vorrichtung zum kontinuierlichen Herstellen von Formkörpern mittels des additiven Fertigungsverfahrens umfasst die Aufnahmeeinrichtung einen zumindest teilweise undurchlässigen Abschnitt, insbesondere ein Lochblech, welcher dazu ausgebildet ist, die aus dem Verarbeitungsbereich gefallenen oder geglittenen Formkörper aufzunehmen. Die Aufnahmeeinrichtung umfasst weiter eine Wanne, welche dazu ausgebildet ist, das beim Herausfallen oder Herausgleiten der Formkörper in der Aufnahmeeinrichtung angefallene und durch das Lochblech gefallene Pulver aufzunehmen. Dadurch kann die Entpulverung ohne manuellen Eingriff vorgenommen werden, sodass kein Mitarbeiter mit dem Pulver in Kontakt kommen muss. Insbesondere kann die Notwendigkeit einer Entpulverungskammer komplett entfallen.

Gemäß einer Ausführungsform der Vorrichtung zum kontinuierlichen Herstellen von Formkörpern mittels des additiven Fertigungsverfahrens kann eine Entpulverungsvorrichtung vorgesehen sein, welche verbleibendes Pulver, welches an den Formstücken nach dem Herausgleiten bzw. -fallen aus dem Verarbeitungsbereich verblieben ist, beseitigt. Das verbleibende Pulver kann etwa abgesaugt werden oder mittels eines Gebläses oder durch Druckluft von den Formstücken wegbefördert werden. Die Entpulverungsvorrichtung kann etwa eine der oben beschriebenen Nachbearbeitungseinrichtungen sein.

Gemäß einer Ausführungsform der Vorrichtung zum kontinuierlichen Herstellen von Formkörpern mittels des additiven Fertigungsverfahrens umfasst der Verarbeitungsbereich einen Kühlbereich, welcher dazu ausgebildet ist, die Formkörper nach der Herstellung zu kühlen. Herkömmlicherweise erfolgt die Abkühlung derart, dass Baukammer mit fertigen Formkörpern in einer Halle abgestellt werden und entweder gar keine Temperaturkontrolle durchgeführt wird oder manuell Temperaturfühler in die Kammer eingeführt werden, um die Abklingkurve zu messen. Durch Verwendung eines Kühlbereichs im Verarbeitungsbereich in der Vorrichtung zum kontinuierlichen Herstellen von Formkörpern kann hingegen gewährleistet werden, dass die Formkörper stets unter identischen oder ähnlichen Bedingungen abkühlen. Dadurch kann eine größere Reproduzierbarkeit der Formkörper erzielt werden. Der Kühlbereich kann einen Temperaturregler umfassen, um identische Abkühlbedingungen zu garantieren.

Gemäß einer Ausführungsform der Vorrichtung zum kontinuierlichen Herstellen von Formkörpern mittels des additiven Fertigungsverfahrens ist der Kühlbereich derart ausgebildet, dass die Formkörper aus dem Verarbeitungsbereich fallen oder gleiten, sobald eine vorgegebene Endtemperatur erreicht ist. Der Kühlbereich schließt sich an einen Baubereich des Verarbeitungsbereichs an, in welchem die Formkörper erzeugt werden.

Gemäß einer Ausführungsform der Vorrichtung zum kontinuierlichen Herstellen von Formkörpern mittels des additiven Fertigungsverfahrens ist der Baubereich derart dimensioniert, dass ein Formkörper im Wesentlichen sofort nach der Fertigstellung der Herstellung in Baubereich in den Kühlbereich eingebracht wird. Dadurch kann bewerkstelligt werden, dass die Formkörper möglichst schnell bereitgestellt werden, da die Zeit, während welcher sich die Formkörper in der Vorrichtung zum kontinuierlichen Herstellen von Formkörpern befinden, minimiert wird.

Gemäß einer Ausführungsform der Vorrichtung zum kontinuierlichen Herstellen von Formkörpern mittels des additiven Fertigungsverfahrens ist in einem Bereich zwischen der Lasereinrichtung und dem Bearbeitungsabschnitt des Verarbeitungsbereichs ein Schutzgas eingebracht. Der Bereich zwischen der Lasereinrichtung und dem Bearbeitungsabschnitt des Verarbeitungsbereichs ist von dem Entnahmeabschnitt des Verarbeitungsbereichs fluidisch getrennt. Dadurch wird verhindert, dass Schutzgas entweicht und das kontinuierliche Herstellen der Formkörper wird gewährleistet. Im Vergleich zu einem Schutzgaswechsel bei jeder Bauteilentnahme wird hierdurch der Verbrauch von Schutzgas erheblich reduziert.

Gemäß einer Ausführungsform der Vorrichtung zum kontinuierlichen Herstellen von Formkörpern mittels des additiven Fertigungsverfahrens weist die Trenneinrichtung eine Vielzahl von Trennelementen auf. Der Antrieb bringt die Trennelemente im Bearbeitungsabschnitt des Verarbeitungsbereichs in den Verarbeitungsbereich ein und nach dem Absenken im Entnahmeabschnitt des Verarbeitungsbereichs aus dem Verarbeitungsbereich aus und führt die Trennelemente zum Bearbeitungsabschnitt des Verarbeitungsbereichs zurück. Die Trennelemente werden somit kontinuierlich in den Verarbeitungsbereich eingebracht und nach unten bewegt, sodass der kontinuierliche Betrieb ermöglicht wird.

Gemäß einer Ausführungsform der Vorrichtung zum kontinuierlichen Herstellen von Formkörpern mittels des additiven Fertigungsverfahrens weist die Trenneinrichtung ein wendelförmiges Element mit mindestens einem Wendelgang auf. Der mindestens eine Wendelgang bildet das mindestens eine Trennelement. Der Antrieb dreht das wendelförmige Element um eine Drehachse herum. Dadurch müssen keine Bauelemente vom unteren Bereich zum oberen Bereich zurückgeführt werden. Vielmehr wird der kontinuierliche Betrieb durch die Drehung des wendelförmigen Elementes ermöglicht. Am unteren Ende wird durch eine entsprechende Vorrichtung verhindert, dass das Pulver mit den Formkörpern vollständig herausgleitet. Etwa kann ein Verschlussmechanismus vorgesehen sein, welcher abgestimmt auf die Drehung des wendelförmigen Elements betrieben wird, sodass jeweils nur das unterste Formstück herausgleitet. Der Verschlussmechanismus kann beispielsweise nur dann betrieben werden, falls das jeweils oberste Formstück vollständig hergestellt wurde.

Gemäß einer Ausführungsform ist die Vorrichtung zum kontinuierlichen Herstellen von Formkörpern mittels selektiven Lasersinterns ausgebildet. Die Vorrichtung kann eine Lasereinrichtung umfassen, welche dazu ausgebildet ist, mindestens einen Laserstrahl auszusenden. Die Lasereinrichtung kann insbesondere auch zwei Laser umfassen. In dem Verarbeitungsbereich wird mittels des mindestens einen ausgesendeten Laserstrahls das Pulver zumindest teilweise zu Formkörpern verarbeitet.

Gemäß einer Ausführungsform ist die Vorrichtung zum kontinuierlichen Herstellen von Formkörpern mittels Binder-Jetting-Verfahren (3D-Druckverfahren) ausgestaltet.

Gemäß einer Ausführungsform des additiven Fertigungsverfahrens werden die Formteile nach der Herstellung in einem Kühlbereich des Verarbeitungsbereichs gekühlt.

Gemäß einer Ausführungsform des additiven Fertigungsverfahrens werden die Formkörper mittels eines Förderelements von dem Verarbeitungsbereich weg transportiert.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Es zeigen:
- Fig. 1: eine schematische Querschnittsansicht einer Vorrichtung zum kontinuierlichen Herstellen von Formkörpern mittels des additiven Fertigungsverfahrens gemäß einer Ausführungsform der Erfindung;
- Fig. 2: eine schematische Querschnittsansicht eines Verarbeitungsbereichs mit einer Trenneinrichtung für eine Vorrichtung zum kontinuierlichen Herstellen von Formkörpern mittels eines additiven Fertigungsverfahrens gemäß einer Ausführungsform der Erfindung;
- Fig. 3: eine schematische Querschnittsansicht eines weiteren Verarbeitungsbereichs mit einer Trenneinrichtung für eine einer Vorrichtung zum kontinuierlichen Herstellen von Formkörpern mittels eines additiven Fertigungsverfahrens gemäß einer Ausführungsform der Erfindung; und
- Fig. 4: ein Flussdiagramm eines additiven Fertigungsverfahrens zum kontinuierlichen Herstellen von Formkörpern gemäß einer Ausführungsform der Erfindung.

### Detaillierte Figurenbeschreibung

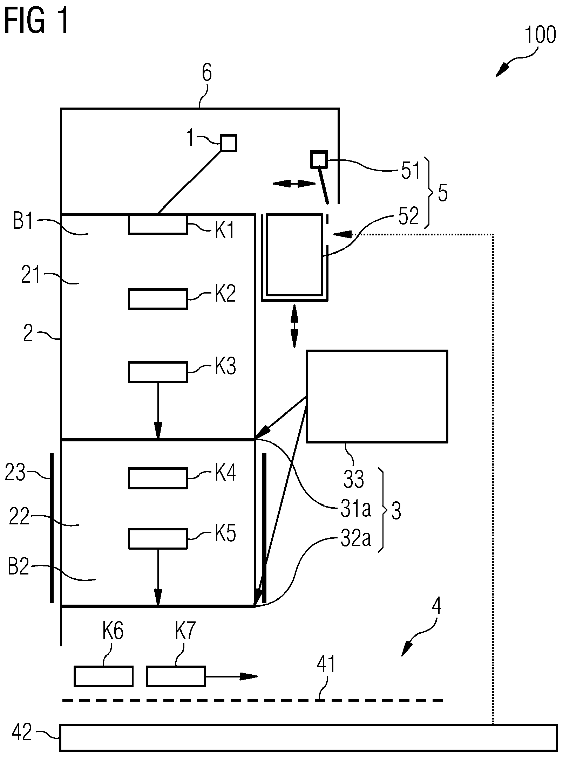

Figur 1 zeigt eine schematische Querschnittsansicht einer Vorrichtung 100 zum kontinuierlichen Herstellen von Formkörpern K1 bis K7 mittels selektiven Lasersinterns, d.h. mittels eines additiven Fertigungsverfahrens. Die Vorrichtung 100 umfasst eine Lasereinrichtung 1, welche einen Laserstrahl aussendet. Weiter umfasst die Vorrichtung ein Baukammergehäuse 6.

Weiter umfasst die Vorrichtung 100 eine Kammer 2, welche einen Verarbeitungsbereich 2 darstellt. Der Verarbeitungsbereich 2 erstreckt sich in vertikaler Richtung vom einem Bearbeitungsabschnitt bzw. Bestrahlungsabschnitt B1, in welchem die Verarbeitung eines Pulvers erfolgt, zu einem Entnahmeabschnitt B2 in welchem die Entnahme der Formkörper K1 bis K7 erfolgt. Der Verarbeitungsbereich 2 wird mit dem Pulver gefüllt, welches mittels des ausgesendeten Laserstrahls schichtweise verarbeitet wird. Durch Bestrahlung des Pulvers findet ein Sintervorgang statt, sodass schichtweise Formkörper K1 bis K7 erzeugt werden.

Eine Trenneinrichtung 3 umfasst einen Antrieb 33 sowie Trennelemente 31a, 32a, welche durch den Antrieb 33 angetrieben werden. Die Trennelemente 31a, 32a bilden Kammern 21, 22 in dem Verarbeitungsbereich 2 aus. Die Trennelemente 31a, 32a werden durch den Antrieb 33 derart bewegt, dass sich diese in senkrechter Richtung nach unten zum Entnahmeabschnitt B2 bewegen. Die Trennelemente 31a, 32a können beispielweise Trennbleche sein, welche in den Verarbeitungsbereich 2 in horizontaler Richtung automatisch eingeschoben werden. Nachdem die Trennelemente 31a, 32a nach unten zum Entnahmeabschnitt B2 verfahren wurden, werden diese wieder aus dem Verarbeitungsbereich 2 in horizontaler Richtung heraus bewegt. Durch einen Mechanismus, welcher von den Antrieb 33 angetrieben wird, werden die Trennelemente 31a, 32a wieder außerhalb des Verarbeitungsbereichs 2 zum oberen Abschnitt in der Nähe des Bearbeitungsabschnitt B1 bewegt und erneut in den Verarbeitungsbereichs 2 eingebracht. Die Trenneinrichtung 3 wird derart betrieben, dass sich stets mindestens ein Trennelement 31a, 31b in dem Verarbeitungsbereich 2 befindet, um eine Verarbeitungskammer 21 zu bilden, in welcher das in dem Verarbeitungsbereich 2 befindliche Pulver mittels des Laserstrahls verarbeitet wird.

Alternativ kann auch vorgesehen sein, dass die Trennelemente 31a, 32a von oben im Bereich des Bearbeitungsabschnitts B1 in den Verarbeitungsbereich 2 eingebracht werden. Durch einen seitlich im Verarbeitungsbereich 2 angebrachten und vertikal verfahrbaren Mechanismus werden die Trennelemente 31a, 32a gehalten und senkrecht nach unten verfahren. Sobald die Trennbleche 31a, 32a im Entnahmeabschnitt B2 ankommen, werden sie von unten wieder aus dem Verarbeitungsbereich 2 entnommen und nach oben zurück transportiert.

Der Antrieb 33 wird vorzugsweise in diskreten Schritten betrieben. Nach jedem Verarbeitungsschritt, während welchem eine Schicht des Pulvers verarbeitet wird, werden dadurch die Trennelemente 31a, 32a weiter abgesenkt. Weiter umfasst die Vorrichtung 100 einen Pulverdosierbehälter 52 und einen Recoater 51, welche einer Pulverzufuhreinrichtung 5 bilden. Nachdem die Trennelemente 31a, 32a abgesenkt wurden, wird mittels des Recoaters 51 Pulver aus dem Pulverdosierbehälter 52 in den Verarbeitungsbereichs 2 eingebracht und geglättet. Dadurch wird eine neue Pulverschicht zum Verarbeiten vorbereitet, welche wiederum mittels des Laserstrahls verarbeitet wird. Der Pulverdosierbehälter 52 kann hierzu ebenfalls in vertikaler Richtung verfahren werden, sodass neues Pulver eingebracht werden kann.

Der Recoater 51 kann auch dazu ausgebildet sein, nach dem Einführen der Trennelemente 31a, 32a die Pulverschicht erneut zu glätten. Dadurch werden Unregelmäßigkeiten der Oberfläche des Pulvers, welche durch das Einführen der Trennelemente 31a, 32a entstehen können wieder behoben.

Nachdem das unterste Trennelement 31a, 32a aus dem Verarbeitungsbereichs 2 ausgebracht wird, wird eine untere Kammer 22 freigelegt. Die dort befindlichen Formkörper K4, K5 werden dadurch freigelegt und gleiten mit dem in der unteren Kammer 22 befindlichen Pulver aus dem Verarbeitungsbereich 2.

In einem Bereich zwischen der Lasereinrichtung 1 und dem Bearbeitungsabschnitt B1 des Verarbeitungsbereichs 2 ist ein Schutzgas eingebracht. Der Bereich zwischen der Lasereinrichtung 1 und dem Bearbeitungsabschnitt B1 des Verarbeitungsbereichs 2 ist von dem Entnahmeabschnitt B2 des Verarbeitungsbereichs 2 fluidisch getrennt.

Unterhalb des Verarbeitungsbereichs 2 befindet sich eine Aufnahmeeinrichtung 4 mit einem Förderelement 41 zur Aufnahme der aus dem Verarbeitungsbereich 2 herausgeglittenen Formkörper K6, K7. Das Förderelement 4 ist beispielsweise ein Fließband, welches die Formkörper K6, K7 in horizontaler Richtung von dem Verarbeitungsbereich 2 wegbefördert. Das Förderelement 41 umfasst ein Lochblech und weist somit Löcher auf, durch welche das Pulver in eine unter dem Förderelement 41 befindliche Wanne 42 fällt. Das in der Wanne 42 anfallende Pulver kann automatisch der Pulverzufuhreinrichtung 5 zugeführt werden. Beispielsweise kann das in der Wanne 42 anfallende Pulver direkt in den Pulverdosierbehälter 52 eingebracht werden. Alternativ kann auch ein separater Behälter vorgesehen sein, um bereits verwendetes Pulver von dem neuen Pulver zu trennen. Das bereits verwendete Pulver kann zusammen mit dem neuen Pulver wieder erneut in den Verarbeitungsbereich 2 eingebracht werden.

Weiter kann eine Nachbearbeitungseinrichtung vorgesehen sein, welche die Formkörper K6, K7 nachbearbeitet. Beispielweise können die Formkörper K6, K7 direkt auf dem Förderelement 41 nachbearbeitet werden. Die Formkörper K6, K7 können beispielsweise mittels eines Staubsaugers oder mittels Druckluft von Pulver befreit werden. Weitere Verarbeitungsschritte können Sandstrahlverfahren, Polierverfahren, Schleifverfahren, Tamperverfahren, Beschichtungsverfahren, Wärmebehandlungsverfahren und/oder Färbeverfahren umfassen.

Weiter ist ein Kühlbereich 23 vorgesehen, welcher einen unteren Bereich des Verarbeitungsbereichs 2 kühlt. Der Kühlbereich 23 umfasst Kühlelemente, welche auch in den Verarbeitungsbereich 2 integriert sein können. In dem Kühlbereich 23 werden die gefertigten Formkörper K4, K5 auf eine vorgegebene Endtemperatur heruntergekühlt. Der Kühlbereich 23 ist vorzugsweise derart dimensioniert, dass die Formkörper K1 bis K7 kurz nach Erreichen der Endtemperatur (etwa innerhalb von Minuten nach Erreichen der Endtemperatur) aus dem Verarbeitungsbereichs 2 fallen oder gleiten. Dadurch wird verhindert, dass sich die Formkörper K1 bis K7 länger als erforderlich in dem Verarbeitungsbereich 2 befinden.

Die Erfindung ist nicht auf die gezeigte Ausführungsform beschränkt. Insbesondere kann sich je nach Anwendungsfall eine entsprechend gewählte Anzahl von Formkörpern K1 bis K7 gleichzeitig in der Vorrichtung 100 befinden. Weiter kann eine beliebig gewählte Anzahl von Trennelementen 31a, 32a vorgesehen sein.

Weiter kann die Vorrichtung auch zum Herstellen von Formkörpern mittels anderer additiver Fertigungsverfahren, insbesondere mittels Binder-Jetting-Verfahren ausgestaltet sein. Hierzu kann das pulverförmige Ausgangsmaterial an vorgegebenen Stellen mit einem Binder verklebt werden. Der restliche Aufbau der Vorrichtung 100 kann der in Figur 1 gezeigten Ausgestaltung entsprechen.

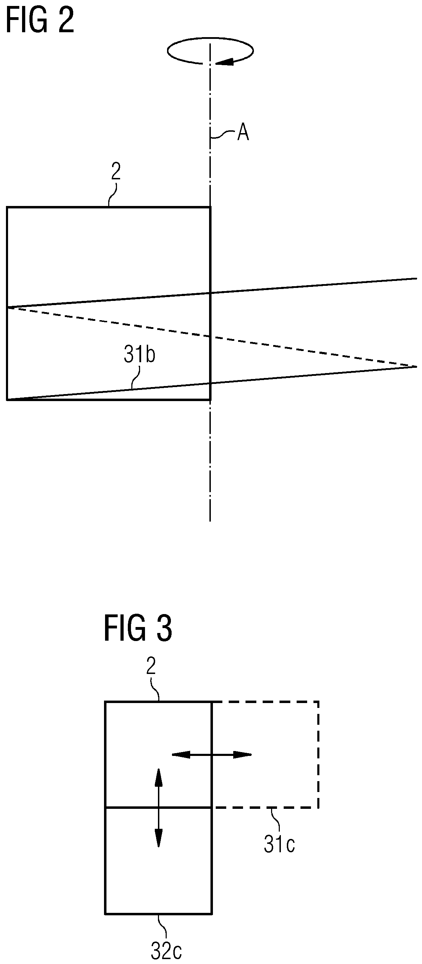

Figur 2 zeigt eine schematische Querschnittsansicht eines Verarbeitungsbereichs 2 mit einer Trenneinrichtung für eine Vorrichtung zum kontinuierlichen Herstellen von Formkörpern K1 bis K7 mittels eines additiven Fertigungsverfahrens. Hierbei umfasst die Trenneinrichtung ein wendelförmiges Element 31b mit mindestens einem Wendelgang. Der mindestens eine Wendelgang 31b bildet das mindestens eine Trennelement. Der Antrieb dreht schrittweise nach jedem Verarbeitungsschritt das wendelförmige Element um eine Drehachse A herum. Dadurch werden die Formstücke K1 bis K7 nach unten befördert. Weiter ist ein (nicht illustrierter) Verschlussmechanismus vorgesehen, um zu gewährleisten, dass jeweils nur mindestens eines der vollständig erzeugten Formstücke herausgleitet.

Figur 3 zeigt eine schematische Querschnittsansicht eines weiteren Verarbeitungsbereichs 2 mit einer Trenneinrichtung für eine Vorrichtung zum kontinuierlichen Herstellen von Formkörpern mittels eines additiven Fertigungsverfahrens. Hierbei können Trennelemente 31c, 32c von zwei verschiedenen Seiten her in den Verarbeitungsbereich 2 eingebracht werden.

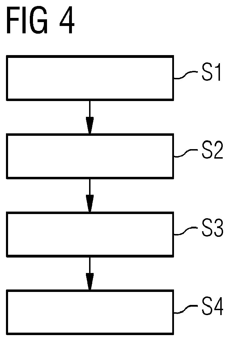

Figur 4 zeigt ein Flussdiagramm eines additiven Fertigungsverfahrens zum kontinuierlichen Herstellen von Formkörpern K1 bis K7, insbesondere mittels selektiven Lasersintern oder Binder-Jetting.

In einem ersten Verfahrensschritt S1 wird in einen Verarbeitungsbereich 2 ein Pulver zur Herstellung der Formkörper K1 bis K7 eingebracht. Das Pulver wird mittels des additiven Fertigungsverfahrens schichtweise verarbeitet. Hierbei wird oder ist mindestens ein Trennelement derart in den Verarbeitungsbereich 2 eingebracht, dass Kammern 21, 22 in dem Verarbeitungsbereich 2 ausgebildet sind oder werden. Das mindestens eine Trennelement wird in senkrechter Richtung bewegt, sodass sich die Kammern 21, 22 während der schichtweisen Verarbeitung in senkrechter Richtung von einem Bearbeitungsabschnitt B1 des Verarbeitungsbereichs 2 zu einem Entnahmeabschnitt B2 des Verarbeitungsbereichs 2 abgesenkt werden. Das mindestens eine Trennelement wird im Entnahmeabschnitt B2 des Verarbeitungsbereichs 2 zumindest teilweise derart aus dem Verarbeitungsbereich 2 ausgebracht, dass eine untere der Kammern 21, 22 freigelegt wird, sodass die hergestellten Formkörper K1 bis K7 aus dem Verarbeitungsbereich 2 fallen oder gleiten.

In einem zweiten Verfahrensschritt S2 werden die Formkörper K1 bis K7 nach der Herstellung in einem Kühlbereich 23 des Verarbeitungsbereichs 2 gekühlt.

In einem dritten Verfahrensschritt S3 werden die Formkörper K1 bis K7 mittels eines Förderelements 41 von dem Verarbeitungsbereich 2 weg transportiert.

In einem vierten Verfahrensschritt S4 erfolgt eine weitere Nachbearbeitung der Formkörper K1 bis K7, etwa mittels Sandstrahlverfahren, Polierverfahren, Schleifverfahren, Tamperverfahren, Beschichtungsverfahren, Wärmebehandlungsverfahren und/oder Färbeverfahren. Weiter können die Formkörper K1 bis K7 zusätzlich entpulvert werden.

Obwohl die Erfindung im Detail durch die bevorzugten Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Vorrichtung (100) zum kontinuierlichen Herstellen von Formkörpern (K1-K7) mittels eines additiven Fertigungsverfahrens, mit:
einem Verarbeitungsbereich (2) zur Aufnahme eines Pulvers, wobei in dem Verarbeitungsbereich (2) mittels des additiven Fertigungsverfahrens eine schichtweise Verarbeitung zumindest eines Teils des Pulvers zu Formkörpern (K1-K7) durchführbar ist; und
einer Trenneinrichtung (3) mit mindestens einem Trennelement (31a, 32a; 31b; 31c, 32c), welches in den Verarbeitungsbereich (2) derart einbringbar oder eingebracht ist, dass Kammern (21, 22) in dem Verarbeitungsbereich (2) ausgebildet werden;
wobei die Trenneinrichtung (3) einen Antrieb (33) aufweist, welcher dazu ausgebildet ist, das mindestens eine Trennelement (31a, 32a; 31b; 31c, 32c) derart zu bewegen, dass
- die Kammern (21, 22) während der schichtweisen Verarbeitung in senkrechter Richtung von einem Bearbeitungsabschnitt (B1) des Verarbeitungsbereichs (2) zu einem Entnahmeabschnitt (B2) des Verarbeitungsbereichs (2) abgesenkt werden, und
- das mindestens eine Trennelement (31a, 32a; 31b; 31c, 32c) im Entnahmeabschnitt (B2) des Verarbeitungsbereichs (2) zumindest teilweise derart aus dem Verarbeitungsbereich (2) ausgebracht wird, dass eine untere der Kammern (21, 22) freigelegt wird, sodass die hergestellten Formkörper (K1-K7) aus dem Verarbeitungsbereich (2) fallen oder gleiten.

2. Vorrichtung (100) nach Anspruch 1, mit einer Aufnahmeeinrichtung (4), welche dazu ausgebildet ist, aus dem Verarbeitungsbereich (2) gefallene oder geglittene Formkörper (K1-K7) aufzunehmen.

3. Vorrichtung (100) nach Anspruch 2, wobei die Aufnahmeeinrichtung (4) ein Förderelement (41) umfasst, um aufgenommene Formkörper (K1-K7) von dem Verarbeitungsbereich (2) weg zu transportieren.

4. Vorrichtung (100) nach Anspruch 3, weiter mit einer Nachbearbeitungseinrichtung, welche dazu ausgebildet ist, die mittels des Förderelements (41) transportierten Formkörper (K1-K7) nachzubearbeiten.

5. Vorrichtung (100) nach Anspruch 4, wobei die Nachbearbeitungseinrichtung dazu ausgebildet ist, die Formkörper (K1-K7) mittels Sandstrahlverfahren zu bearbeiten, zu polieren, zu schleifen, zu tampern, zu beschichten, mittels Wärme zu behandeln und/oder zu färben.

6. Vorrichtung (100) nach einem der Ansprüche 2 bis 5, mit einer Pulverzufuhreinrichtung (5), welche dazu ausgebildet ist, dem Verarbeitungsbereich (2) schichtweise Pulver zuzuführen, wobei die Pulverzufuhreinrichtung (5) mit der Aufnahmeeinrichtung (4) derart gekoppelt ist, um beim Herausfallen oder Herausgleiten der Formkörper (K1-K7) in der Aufnahmeeinrichtung (4) angefallenes Pulver zumindest teilweise dem Verarbeitungsbereich (2) wieder zuzuführen.

7. Vorrichtung (100) nach einem der Ansprüche 2 bis 6, wobei die Aufnahmeeinrichtung (4) ein Lochblech (41) umfasst, welches dazu ausgebildet ist, die aus dem Verarbeitungsbereich (2) gefallenen oder geglittenen Formkörper (K1-K7) aufzunehmen, und wobei die Aufnahmeeinrichtung (4) weiter eine Wanne (42) umfasst, welche dazu ausgebildet ist, das beim Herausfallen oder Herausgleiten der Formkörper (K1-K7) in der Aufnahmeeinrichtung (4) angefallene und durch das Lochblech (41) gefallene Pulver aufzunehmen.

8. Vorrichtung (100) nach einem der vorangehenden Ansprüche, wobei der Verarbeitungsbereich (2) einen Kühlbereich (23) umfasst, welcher dazu ausgebildet ist, die Formkörper (K1-K7) nach der Herstellung zu kühlen.

9. Vorrichtung (100) nach Anspruch 8, wobei der Kühlbereich (23) derart ausgebildet ist, dass die Formkörper (K1-K7) aus dem Verarbeitungsbereich (2) fallen oder gleiten, sobald eine vorgegebene Endtemperatur erreicht ist.

10. Vorrichtung (100) nach einem der vorangehenden Ansprüche, wobei in einem Bereich zwischen der Lasereinrichtung (1) und dem Bearbeitungsabschnitt (B1) des Verarbeitungsbereichs (2) ein Schutzgas eingebracht ist, und wobei der Bereich zwischen der Lasereinrichtung (1) und dem Bearbeitungsabschnitt (B1) des Verarbeitungsbereichs (2) von dem Entnahmeabschnitt (B2) des Verarbeitungsbereichs (2) fluidisch getrennt ist.

11. Vorrichtung (100) nach einem der vorangehenden Ansprüche, wobei die Trenneinrichtung (3) eine Vielzahl von Trennelementen (31c, 32c) aufweist, wobei der Antrieb (33) dazu ausgebildet ist, die Trennelemente (31c, 32c) im Bearbeitungsabschnitt (B1) des Verarbeitungsbereichs (2) in den Verarbeitungsbereich (2) einzubringen und nach dem Absenken im Entnahmeabschnitt (B2) des Verarbeitungsbereichs (2) aus dem Verarbeitungsbereich (2) auszubringen und zum Bearbeitungsabschnitt (B1) des Verarbeitungsbereichs (2) zurückzuführen.

12. Vorrichtung (100) nach einem der Ansprüche 1 bis 10, wobei die Trenneinrichtung (3) ein wendelförmiges Element mit mindestens einem Wendelgang (31b) aufweist, wobei der mindestens eine Wendelgang (31b) das mindestens eine Trennelement (31b) bildet, und wobei der Antrieb (33) dazu ausgebildet ist, das wendelförmige Element um eine Drehachse herum zu drehen.

13. Vorrichtung (100) nach einem der Ansprüche 1 bis 11, wobei es sich bei dem additiven Fertigungsverfahren um selektives Lasersintern oder um ein Binder-Jetting-Verfahren handelt.

14. Additives Fertigungsverfahren zum kontinuierlichen Herstellen von Formkörpern (K1-K7), wobei zumindest ein Teil eines in einen Verarbeitungsbereich (2) eingebrachten Pulvers zur Herstellung der Formkörper (K1-K7) mittels des additiven Fertigungsverfahrens schichtweise verarbeitet wird (S1);
wobei mindestens ein Trennelement (31a, 32a; 31b; 31c, 32c) derart in den Verarbeitungsbereich (2) eingebracht ist oder wird, dass Kammern (21, 22) in dem Verarbeitungsbereich (2) ausgebildet werden; und
wobei das mindestens eine Trennelement (31a, 32a; 31b; 31c, 32c) derart bewegt wird, dass
- die Kammern (21, 22) während der schichtweisen Verarbeitung in senkrechter Richtung von einem Bearbeitungsabschnitt (B1) des Verarbeitungsbereichs (2) zu einem Entnahmeabschnitt (B2) des Verarbeitungsbereichs (2) abgesenkt werden, und
- das mindestens eine Trennelement (31a, 32a; 31b; 31c, 32c) im Entnahmeabschnitt (B2) des Verarbeitungsbereichs (2) zumindest teilweise derart aus dem Verarbeitungsbereich (2) ausgebracht wird, dass eine untere der Kammern (21, 22) freigelegt wird, sodass die hergestellten Formkörper (K1-K7) aus dem Verarbeitungsbereich (2) fallen oder gleiten.

15. Verfahren nach Anspruch 14, wobei die Formteile nach der Herstellung in einem Kühlbereich (23) des Verarbeitungsbereichs (2) gekühlt werden (S2).
